# EUROPÄISCHE PATENTSCHRIFT

(11) **EP 3 461 973 B1**
(45) Veröffentlichungstag und Bekanntmachung des Hinweises auf die Patenterteilung: **19.05.2021**
(21) Anmeldenummer: 18183213.0
(22) Anmeldetag: 12.07.2018
(51) Int. Cl.: E05B 17/10, E05B 85/16, B60Q 1/26, E05B 81/78, E05B 81/76

(54) **GRIFFANORDNUNG MIT LEUCHTMODUL UND VERFAHREN ZUR HERSTELLUNG**
HANDLE ASSEMBLY WITH LIGHT MODULE AND METHOD OF MANUFACTURING
ENSEMBLE POIGNÉE AVEC MODULE D'ÉCLAIRAGE ET PROCÉDÉ DE FABRICATION

(30) Priorität: 29.09.2017 DE 102017122794
(43) Veröffentlichungstag der Anmeldung: 03.04.2019
(73) Patentinhaber: HUF Hülsbeck & Fürst GmbH & Co. KG, 42551 Velbert (DE)
(72) Erfinder: BECK, Andreas, 44795 Bochum (DE); PESCHL, Andreas, 42555 Velbert (DE)
(74) Vertreter: Zenz Patentanwälte Partnerschaft mbB

(56) Entgegenhaltungen:
- EP-A2- 1 582 670
- DE-A1-102008 042 330
- DE-A1-102010 011 089
- DE-A1-102010 061 643
- DE-A1-102013 112 835

## Beschreibung

Die vorliegende Erfindung betrifft eine Griffanordnung für ein Kraftfahrzeug sowie ein Verfahren zum Herstellen einer entsprechenden Griffanordnung. Insbesondere betrifft die vorliegende Erfindung eine Griffanordnung für Kraftfahrzeuge, die in einem Handhabebereich der Griffanordnung ein Leuchtmodul aufweist.

Griffanordnungen für Kraftfahrzeuge, die zum Beleuchten der Griffmulde und/oder für eine Vorfeldbeleuchtung ein Lichtmodul aufweisen, sind aus dem Stand der Technik bekannt. In Abhängigkeit von der Formgebung der Griffanordnung als solcher sowie dem zu erfüllenden Beleuchtungszweck wird das Leuchtmodul an einer dazu vorgesehenen Stelle innerhalb der Griffanordnung angeordnet und über Leitungen mit einer zentralen Steuereinrichtung des Kraftfahrzeuges verbunden. Bei entsprechenden Griffanordnungen ist in dem Handhabebereich der Griffanordnung üblicherweise noch ein Platinenmodul angeordnet, welches üblicherweise Sensoren umfasst, über die die Annäherung einer Hand eines Benutzers oder eines ID-Gebers ermittelt wird. Auch dieses Platinenmodul ist über Leitungen mit der zentralen Steuereinrichtung des Kraftfahrzeuges gekoppelt.

Aus der DE 10 2010 011 089 A1 ist beispielsweise eine Griffanordnung und ein Verfahren zum Herstellen der Griffanordnung bekannt, wobei bei dieser Griffanordnung auch ein Leuchtmodul verwendet wird.

Nachteilig bei den bekannten Griffanordnungen mit Leuchtmodul und Platinenmodul ist, dass aus der Griffanordnung eine Mehrzahl von Leitungen herauszuführen ist, die mit der zentralen Steuereinrichtung zu koppeln sind, nämlich Leitungen für das Leuchtmodul und Leitungen für das Platinenmodul, was die Montage und den Betrieb der Griffanordnung aufwendig und fehleranfällig macht, da sichergestellt werden muss, dass beide Module einwandfrei mit der zentralen Steuereinrichtung gekoppelt sind und diese Kopplung jederzeit fehlerfrei funktioniert.

Es ist Aufgabe der vorliegenden Erfindung, eine Griffanordnung für ein Kraftfahrzeug bereitzustellen, welche mit weniger Arbeitsschritten an ein Kraftfahrzeug montierbar ist und weniger fehleranfällig betrieben werden kann. Es ist ferner Aufgabe der vorliegenden Erfindung, ein Verfahren zum Herstellen einer solchen Griffanordnung bereitzustellen.

Das Problem wird erfindungsgemäß gelöst durch eine Griffanordnung für ein Kraftfahrzeug gemäß Patentanspruch 1. Die erfindungsgemäße Griffanordnung umfasst einen Griffkörper und eine Griffkörperabdeckung, wobei der Griffkörper einen Handhabebereich sowie einen ersten und einen zweiten Befestigungsbereich mit jeweils einem Befestigungsmittel aufweist, mit welchen die Griffanordnung an einem Kraftfahrzeug befestigbar ist und wobei der Handhabebereich des Griffkörpers einen Handhabe-Aufnahmeraum und zumindest einer der Befestigungsbereiche einen Befestigungs-Aufnahmeraum aufweist, der mit dem Handhabe-Aufnahmeraum gekoppelt ist. Die Griffanordnung umfasst ferner ein in dem Handhabe-Aufnahmeraum angeordnetes Platinenmodul, welches über eine Leitungseinrichtung mit einer Steuereinrichtung des Kraftfahrzeuges koppelbar ist, sowie zumindest ein in dem Befestigungs-Aufnahmeraum angeordnetes Leuchtmodul. Erfindungsgemäß ist zwischen dem Platinenmodul und dem Leuchtmodul ein starres Verbindungsmittel angeordnet, welches das Platinenmodul und das Leuchtmodul mechanisch starr und elektrisch miteinander koppelt. Indem ein mechanisch starres Verbindungsmittel zwischen dem Platinenmodul und dem Leuchtmodul bereitgestellt wird, wird eine Bauteileeinheit bereitgestellt, die in ihrer Gesamtheit bewegbar und in der Griffanordnung fixierbar ist. Durch beispielsweise das Fixieren des Platinenmoduls in dem Handhabe-Aufnahmeraum erfolgt gleichzeitig die Anordnung des Leuchtmoduls in dem Befestigungs-Aufnahmeraum, wobei die Flexibilität im Hinblick auf verschiedene Ausgestaltungen von Griffanordnungen gewährleistet ist, indem man beispielsweise das Verbindungsmittel an die jeweiligen Geometrien der Griffanordnungen anpasst.

Neben der mechanischen Kopplung des Leuchtmoduls an das Platinenmodul findet ferner eine elektrische Kopplung über das Verbindungsmittel statt. Dadurch ist es möglich, dass das Leuchtmodul über die Leitungseinrichtung, mit welcher das Platinenmodul an die Steuereinrichtung des Kraftfahrzeuges koppelbar ist, ebenfalls mit dieser gekoppelt und über diese Leitungseinrichtung angesteuert werden kann. Obgleich ein Leuchtmodul und ein Platinenmodul in der Griffanordnung verbaut sind, ist erfindungsgemäß nur eine Leitungseinrichtung notwendig, nämlich die, über welche das Platinenmodul mit der Steuereinrichtung koppelbar ist. Im Hinblick auf die Herstellung der Griffanordnung entfällt die Justage und Fixierung von zumindest einem Modul, da bei Anordnung und Fixierung beispielsweise des Platinenmoduls über das starre Verbindungsmittel eine Anordnung und Fixierung des Leuchtmoduls erfolgt. Dies macht es beispielsweise überflüssig, dass in der Griffanordnung spezielle Halterungen für das Leuchtmodul vorgesehen sind, da dieses über das starre Verbindungsmittel an dem Platinenmodul gehalten ist. Darüber hinaus entfällt die Leitungseinrichtung, die bei dem Stand der Technik zum Verbinden des Leuchtmoduls mit der Steuereinrichtung des Kraftfahrzeuges vorgesehen ist. Erfindungsgemäß wird die Kopplung des Leuchtmoduls mit der Steuereinrichtung über die Leitungseinrichtung bewerkstelligt, die zum Koppeln des Platinenmoduls an die Steuereinrichtung vorgesehen ist. Es entfällt also die Leitungseinrichtung, die Griffanordnung kann rascher mit dem Kraftfahrzeug bzw. dessen Steuereinrichtung gekoppelt werden. Da lediglich eine Verbindung über eine Leitungseinrichtung besteht, ist die Fehleranfälligkeit vermindert.

Um das in dem Handhabebereich der Griffanordnung angeordnete Platinenmodul zu schützen, ist es bei einer bevorzugten Ausführungsform der erfindungsgemäßen Griffanordnung vorgesehen, dass das in dem Handhabe-Aufnahmeraum angeordnete Platinenmodul mit einem Schutzdeckel versehen ist. Dieser kann derart ausgebildet sein, dass er auch eine elektrische Abschirmung für das Platinenmodul bereitstellt.

Um gegen Umwelteinflüsse oder aus anderem Grund empfindliche Teile oder Abschnitte des Platinenmoduls zu schützen, ist es bei einer bevorzugten Ausführungsform vorgesehen, dass das Platinenmodul zumindest abschnittsweise mit einer Vergussmasse abgedeckt ist. Die Abdeckung kann beispielsweise vor dem Einbringen des Platinenmoduls in den Handhabe-Aufnahmeraum stattfinden.

Der vorgenannte Schutzdeckel ist bei einer bevorzugten Ausführungsform derart mit dem Handhabebereich der Griffanordnung abgestimmt, dass Schutzdeckel und Handhabebereich einen abgedichteten Schutzraum für das Platinenmodul ausbilden, der lediglich an einer Seite in Fluid-Kommunikation mit der Umgebung steht. Über diese Öffnung kann der Schutzraum mit einer Vergussmasse verfüllt werden, welche das Platinenmodul vor Umwelteinflüssen schützt. Vorteilhafterweise dient der Schutzdeckel also nicht nur dazu, das Elektronikmodul nach außen zu schützen, sondern stellt auch einen Schutzraum bereit, der für einen Verguss mit Vergussmasse genutzt werden kann. Indem der Schutzraum bereitgestellt wird, kann die Abdeckung des Platinenmoduls mit Vergussmasse besonders einfach erfolgen. In diesem Fall hängt die Art und Weise der Abdeckung des Platinenmoduls mit Vergussmasse von der genauen räumlichen Ausgestaltung des Schutzraums ab. Mit Hilfe des Schutzraums ist insbesondere eine zumindest abschnittsweise Ummantelung des Platinenmoduls mit Vergussmasse sehr einfach zu erreichen.

Erfindungsgemäß ist es vorgesehen, dass das Leuchtmodul mit einem Verbindungsmittel mechanisch starr und elektrisch mit dem Platinenmodul verbunden ist. Insbesondere der Übergangsbereich Platinenmodul/Verbindungsmittel ist im Hinblick auf mechanische Belastungen besonders problematisch, so dass es bei einer bevorzugten Ausführungsform der erfindungsgemäßen Griffanordnung vorgesehen ist, dass die Vergussmasse den Übergangsbereich Platinenmodul/Verbindungsmittel umschließt. Die Abdeckung des Übergangsbereichs dient auch dazu, eine ggf. bei diesem Bereich stattfindende elektrische Kopplung zwischen Verbindungsmittel und Platinenmodul gegen beispielsweise Feuchtigkeit abzudichten.

Die Griffkörperabdeckung bedeckt unter anderem den in dem Handhabebereich angeordneten Handhabe-Aufnahmeraum sowie die darin angeordneten Bauteile, sprich das Platinenmodul und gegebenenfalls die Vergussmasse sowie den Schutzdeckel. Um gewisse Fehler im Hinblick auf die Fertigungsgenauigkeit ausgleichen zu können, ist die Griffkörperabdeckung derart ausgestaltet, dass sie nicht direkt an dem Schutzdeckel und/oder der Vergussmasse anliegt. Um aber zu vermeiden, dass die Griffkörperabdeckung bei einer erhöhten Vibration gegen ein abgedecktes Bauteil schlägt, ist es bei einer bevorzugten Ausführungsform vorgesehen, dass in der Griffanordnung ein elastomeres Stützmittel angeordnet ist, gegen welches sich die Griffkörperabdeckung abstützt. Wo das elastomere Stützmittel angeordnet ist, hängt davon ab, wie genau das "Innenleben" der Griffanordnung gestaltet ist. Wird beispielsweise auf den Schutzdeckel verzichtet, oder dieser nach dem Einfügen der Vergussmasse wieder entfernt, kann das elastomere Stützmittel auf der Vergussmasse selbst angeordnet sein. Sofern ein Schutzdeckel in der Griffanordnung vorhanden ist, kann das Stützmittel auch auf diesem angeordnet sein. Generell verhält es sich so, dass das elastomere Stützmittel an einem solchen Ort innerhalb der Griffanordnung angeordnet wird, bei welchem bei einem Auftreten von Vibrationen ein unerwünschter Kontakt zwischen Griffkörperabdeckung und Innenleben der Griffanordnung zu befürchten ist.

Die oben genannte Aufgabe wird ferner gelöst durch ein Verfahren zum Herstellen einer Griffanordnung nach Patentanspruch 7. Erfindungsgemäß wird ein Griffkörper mit einem Handhabebereich und einem ersten und einem zweiten Befestigungsbereich bereitgestellt, wobei der Handhabebereich des Griffkörpers einen Handhabe-Aufnahmeraum und zumindest einer der Befestigungsbereiche einen Befestigungs-Aufnahmeraum aufweist, der mit dem Handhabe-Aufnahmeraum gekoppelt ist, ein Platinenmodul in den Handhabe-Aufnahmebereich eingeführt wird, wobei dabei ein Leuchtmodul, das über ein Verbindungsmittel mechanisch starr und elektrisch mit dem Platinenmodul gekoppelt ist, in einen Befestigungs-Aufnahmeraum eingeführt wird, das Platinenmodul mit einer Vergussmasse umgossen und schließlich die Griffkörperabdeckung aufgesetzt und befestigt wird. Indem das Leuchtmodul mechanisch starr und elektrisch über ein Verbindungsmittel mit dem Platinenmodul gekoppelt ist, ist es möglich, das Leuchtmodul sowie das Platinenmodul in einem Arbeitsschritt innerhalb der Griffanordnung zu platzieren. Durch die Kopplung der beiden vorgenannten Module, die dadurch mittels einer Leitungseinrichtung separat voneinander angesprochen werden können, muss bei der Montage der Griffanordnung an dem Kraftfahrzeug nur noch eine Leitungseinrichtung mit der zentralen Steuereinrichtung des Kraftfahrzeuges gekoppelt werden. Zur Kopplung der erfindungsgemäßen Türgriffanordnung ist also auch ein geringerer Arbeitsaufwand notwendig, die Fehleranfälligkeit bei dem Betrieb der Griffanordnung ist vermindert, da lediglich eine Leitungseinrichtung vorhanden ist.

Um das Platinenmodul vor Umwelteinflüssen zu schützen und elektrisch abzuschirmen, ist es bei einer bevorzugten Ausführungsform des erfindungsgemäßen Verfahrens vorgesehen, dass das Platinenmodul nach dem Einbringen in den Handhabe-Aufnahmeraum mit einem Schutzdeckel eingehaust wird, so dass ein zu einer Seite zumindest abschnittsweise offener, ansonsten fluid-dichter Schutzraum entsteht und der Schutzraum anschließend mit einer flüssigen Vergussmasse verfüllt wird. Nach dem Vergießen der Vergussmasse härtet diese in dem Schutzraum aus und bedeckt das Platinenmodul zumindest abschnittsweise.

Der Schutzdeckel dient zum einen zum Schützen des Platinenmoduls, bildet aber gleichzeitig einen Schutzraum, in welchen die Vergussmasse eingefüllt wird, die das Platinenmodul vor Umwelteinflüssen schützt. Wie bereits oben dargelegt, ist der Übergangsbereich zwischen dem Platinenmodul und dem Verbindungsmittel im Hinblick auf mechanische Beanspruchungen besonders kritisch. Bei einer bevorzugten Ausführungsform des erfindungsgemäßen Verfahrens ist es daher vorgesehen, dass das Platinenmodul nach dem Einbringen in den Handhabe-Aufnahmeraum mit einem Schutzdeckel derart eingehaust wird, dass sich der Schutzraum über den Übergangsbereich Platinenmodul/Verbindungsmittel erstreckt und der Schutzraum derart mit flüssiger Vergussmasse verfüllt wird, dass der Übergangsbereich Platinenmodul/Verbindungsmittel abgedeckt ist. Indem der Schutzdeckel wie oben dargelegt angepasst und angebracht wird, kann die Vergussmasse derart verfüllt werden, dass diese nicht nur das Platinenmodul als solches schützt, sondern auch den Übergangsbereich Elektronikmodul/Verbindungsmittel abdeckt, so dass sich eine gesonderte (mechanische) Absicherung dieses Übergangsbereichs erübrigt.

In Abhängigkeit von der verwendeten Vergussmasse ist es bei einer bevorzugten Ausführungsform vorgesehen, dass der Schutzdeckel nach dem Aushärten der Vergussmasse und vor dem Aufbringen der Griffkörperabdeckung wieder entfernt wird. Bei einer entsprechenden Vorgehensweise wird eine Griffanordnung mit reduziertem Gewicht erhalten, was im Hinblick auf den Kraftstoffverbrauch von Vorteil ist. Das Entfernen des Schutzdeckels kommt insbesondere dann in Frage, wenn die Vergussmasse als solche und/oder die Griffkörperabdeckung selbst für eine ausreichende elektrische Abschirmung des Platinenmoduls sorgen.

Um bei auftretenden Vibrationen eine Geräuschentwicklung durch Aneinanderschlagen der Griffkörperabdeckung und dem innen liegende Bauteil zu vermeiden, ist es bei einer bevorzugten Ausführungsform des erfindungsgemäßen Verfahrens vorgesehen, dass vor dem Aufbringen der Griffkörperabdeckung ein elastomeres Stützmittel derart angeordnet wird, dass nach dem Aufbringen der Griffkörperabdeckung diese gegen die Vergussmasse oder den Schutzdeckel abgestützt wird. An welcher Stelle genau das elastomere Stützmittel anzubringen ist, hängt von der Ausgestaltung der Griffkörperabdeckung sowie des Innenlebens der Griffanordnung ab. Regelmäßig wird der Ort zu wählen sein, bei welchem der geringste Abstand zwischen der Griffkörperabdeckung und der Vergussmasse bzw. dem Schutzdeckel gegeben ist.

Erfindungsgemäß ist das Leuchtmodul über ein Verbindungsmittel mechanisch starr und elektrisch mit dem Platinenmodul gekoppelt. Dabei ist denkbar, dass sämtliche der drei vorgenannten Bauteile einstückig ausgeführt sind, d. h. durch lediglich einen Basiskörper bereitgestellt werden, wobei verschiedene Abschnitte des Basiskörpers das Leuchtmodul, das Verbindungsmodul sowie das Platinenmodul bilden. Eine entsprechende Vorgehensweise ist immer dann sinnvoll, wenn eine hohe Stückzahl einer Griffanordnung mit einer bestimmten Geometrie zu fertigen ist. Nachteilig bei dieser Vorgehensweise ist es, dass der Basiskörper, der sämtliche der drei vorgenannten Bauteile bereitstellt, lediglich bei einer Geometrie des Innenraums einer Griffanordnung verwendet werden kann. Bei einer bevorzugten Ausführungsform des erfindungsgemäßen Verfahrens, mit welcher das Verfahren flexibel an eine Vielzahl von Griffanordnungen anpassbar ist, ist es vorgesehen, dass das Platinenmodul vor dem Einführen in den Handhabe-Aufnahmeraum über ein starres Verbindungsmittel mechanisch starr und elektrisch mit dem Leuchtmodul gekoppelt wird.

Im Nachfolgenden werden bevorzugte Ausführungsformen der erfindungsgemäßen Griffanordnung sowie des erfindungsgemäßen Verfahrens unter Bezugnahme auf die Zeichnung beschrieben, in welcher:
Figur 1 eine Seitenansicht einer ersten Ausführungsform der erfindungsgemäßen Griffanordnung zeigt;
Figuren 2a und 2b eine Seitenansicht sowie eine Schrägansicht der ersten Ausführungsform der Griffanordnung ohne Griffkörperabdeckung zeigen;
Figuren 3a und 3b eine Schrägansicht sowie eine Seitenansicht einer Kombination Platinenmodul/Verbindungsmittel/Leuchtmodul zeigen;
Figur 4 eine Schrägansicht des Platinenmoduls sowie einer Kombination Verbindungsmittel/Leuchtmodul zeigt;
Figuren 5a - 5f verschiedene Seitenschrägansichten zeigen, die Ausführungsformen des erfindungsgemäßen Verfahrens veranschaulichen;
Figuren 6a und 6b eine Seitenansicht sowie eine Seitenschnittansicht der ersten Ausführungsform der Griffanordnung zeigen; und
Figur 7 eine weitere Seitenschnittansicht der ersten Ausführungsform der erfindungsgemäßen Griffanordnung zeigt.

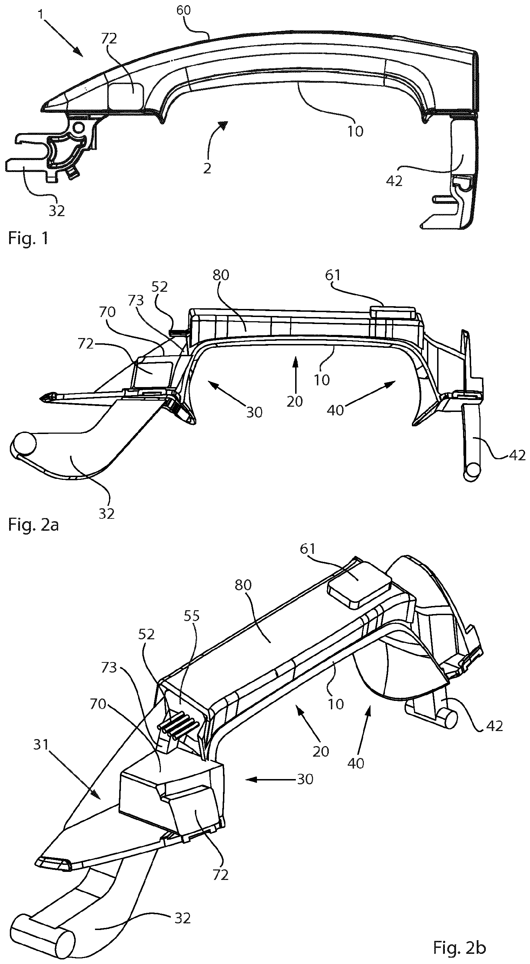

Figur 1 zeigt eine Seitenansicht einer ersten Ausführungsform der erfindungsgemäßen Griffanordnung 1. Diese umfasst einen Griffkörper 10 und eine den Griffkörper abdeckende Griffkörperabdeckung 60. An den beiden Endabschnitten des Griffkörpers 10 sind Befestigungsmittel 32, 42 angeordnet, über welche die Griffanordnung an einem Kraftfahrzeug, beispielsweise einer Tür des Kraftfahrzeuges, befestigbar ist. Bei der gezeigten Ausführungsform der erfindungsgemäßen Griffanordnung ist der Griffkörper 10 derart ausgebildet, dass im mittleren

Bereich eine Griffmulde 2 ausgebildet ist, welche ein Benutzer beim Öffnen beispielsweise einer Tür des Kraftfahrzeuges hintergreifen kann. Im linken Abschnitt der Griffkörperabdeckung ist eine Lichtaustrittsfläche 72 angeordnet, die zur Vorfeldbeleuchtung dient.

Die Figuren 2a und 2b zeigen eine Seitenansicht sowie eine Schrägansicht der ersten Ausführungsform der Griffanordnung 1, wobei die Griffkörperabdeckung 60 fortgelassen wurde, um das Innenleben der Griffanordnung darzustellen. Bei den Figuren 2a und 2b sowie sämtlichen nachfolgenden Figuren sind die Befestigungsmittel 32, 42 lediglich stilisiert wiedergegeben.

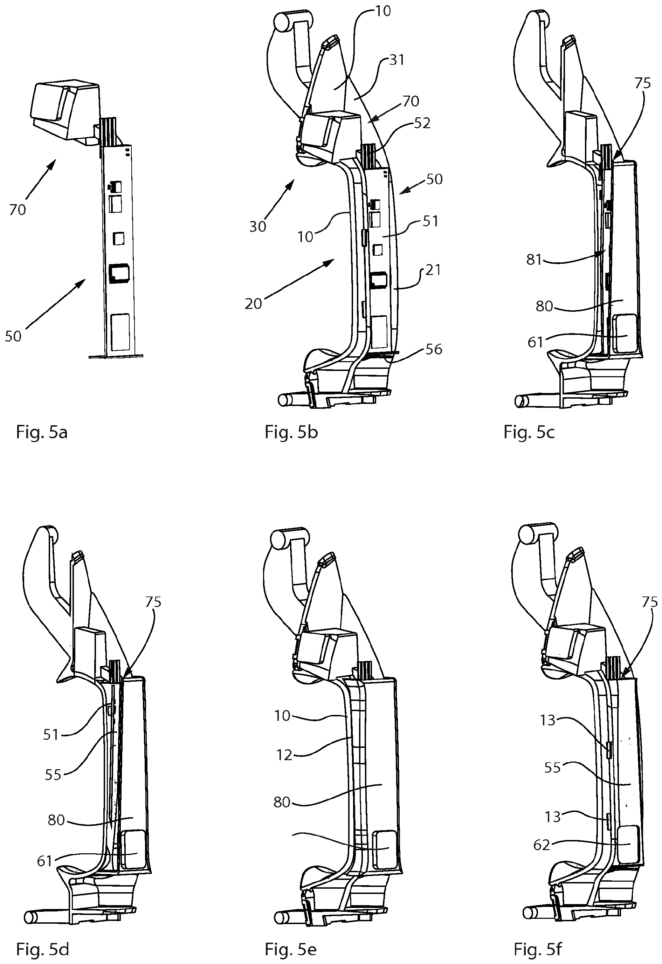

Der Griffkörper 10 ist in drei Bereiche unterteilt, nämlich einen zentralen Handhabebereich 20 sowie außenliegende Befestigungsbereiche 30, 40. Der linke erste Befestigungsbereich 30 umfasst einen Befestigungs-Aufnahmeraum 31, der mit einem Handhabe-Aufnahmeraum 21 gekoppelt ist. Die beiden vorgenannten Aufnahmeräume sind bei den Figuren 2a und 2b zum größten Teil mit Bauteilen belegt. Im Hinblick auf die Ausgestaltung und Anordnung der Aufnahmeräume siehe insbesondere Figur 5b.

In dem Griffkörper 10 ist im Befestigungsbereich 30, genauer gesagt in dem dort angeordneten Befestigungs-Aufnahmeraum 31, ein Leuchtmodul 70 mit einer Lichtaustrittsfläche 72 angeordnet, wobei die Lichtaustrittsfläche 72 für die Vorfeldbeleuchtung zuständig ist. Das Leuchtmodul 70 ist über ein Verbindungsmittel 73 mechanisch starr und elektrisch mit einem Platinenmodul gekoppelt, welches bei den Figuren 2a und 2b durch eine Vergussmasse 55 ummantelt ist, daher in den beiden Figuren nicht zu erkennen ist. Das in der Vergussmasse 55 angeordnete Platinenmodul ist über eine Leitungseinrichtung 52, die lediglich teilweise angedeutet ist, mit einer (nicht dargestellten) zentralen Steuereinrichtung des Kraftfahrzeuges koppelbar. Die Vergussmasse ist innerhalb eines durch einen Schutzdeckel 80 ausgebildeten Schutzraums (siehe 5c) angeordnet, wobei der Schutzdeckel 80 das Platinenmodul gegen äußere elektrische Einwirkungen abgeschirmt.

In dem rechten Bereich des Schutzdeckels 80 ist auf diesem ein elastomeres Stützmittel 61 angeordnet, gegen welches sich die Griffkörperabdeckung 60 abstützt, um so beim Auftreten von Vibrationen ein Schlagen der Griffkörperabdeckung gegen Bauteile im Inneren der Griffanordnung zu vermeiden.

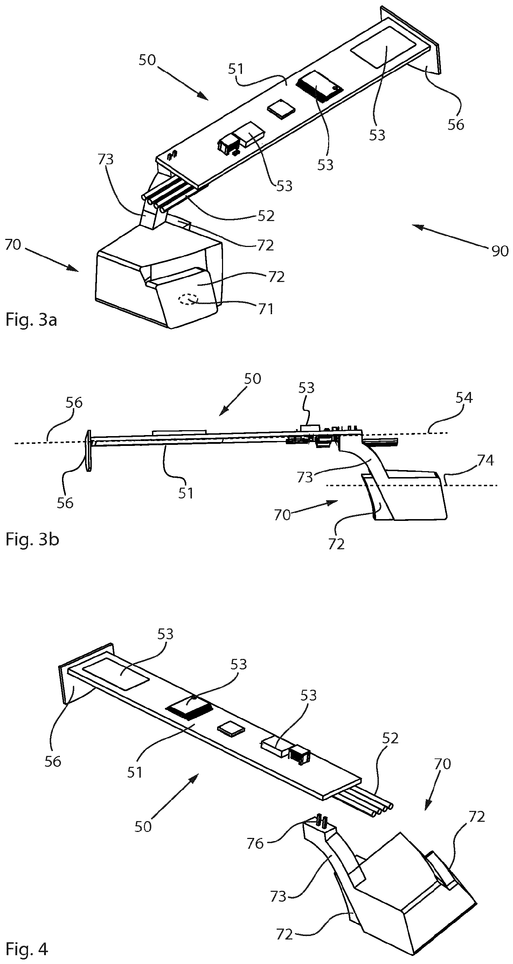

Figuren 3a und 3b zeigen eine Schrägansicht sowie eine Seitenansicht einer Kombination Platinenmodul/Verbindungsmittel/Leuchtmodul. Wie es bei den Figuren 3a und 3b zu erkennen ist, umfasst das Leuchtmodul 70 bei der ersten Ausführungsform der erfindungsgemäßen Griffanordnung zwei Lichtaustrittsflächen 72, die für die Vorfeldbeleuchtung und eine Griffmuldenbeleuchtung zuständig sind. Lediglich angedeutet ist bei der vorderen Lichtaustrittsfläche 72, dass dieser ein Leuchtmittel 71 zugeordnet ist. In Abhängigkeit von dem inneren Aufbau des Leuchtmoduls kann auch der weiteren Lichtaustrittsfläche ein separates Leuchtmittel zugeordnet sein, es kann aber auch ausreichend sein, lediglich zentral ein Leuchtmittel vorzusehen, welches zeitgleich beide Lichtaustrittsflächen bedient. Das Leuchtmodul ist über ein Verbindungsmittel 73 mechanisch starr an einem Platinenträger 51 des Platinenmoduls 50 befestigt. Auf dem Platinenträger 51 ist eine Mehrzahl von elektrischen Bauteilen 53 angeordnet, bei denen es sich beispielsweise um Kommunikationsmittel bzw. Sensoren für die Erfassung der Annäherung eines Benutzers oder/und eines ID-Gebers eines Benutzers handeln kann. Der Platinenträger 51 ist über ein lediglich angedeutetes Leitungsmittel 52, welches bei einer Stirnseite an dem Platinenträger 51 befestigt ist, mit einer Steuereinrichtung eines Kraftfahrzeuges koppelbar. Die gegenüberliegende Stirnseite des Platinenträgers 51 umfasst einen Wandabschnitt 56, der zusammen mit dem Schutzdeckel einen lediglich zu einer Seite fluid-offenen Schutzraum bildet, wie dies unter Bezugnahme auf nachfolgende Figuren dargelegt ist.

Wie insbesondere Figur 3b zu entnehmen ist, ist eine Mittelebene 74 des Leuchtmoduls unterhalb einer Mittelebene 54 des Platinenträgers 51 angeordnet. Im Hinblick auf die übliche Ausgestaltung einer Griffanordnung für eine Tür eines Kraftfahrzeuges ist eine derartige Anordnung der Mittelebenen von Leuchtmodul und Platinenmodul zueinander bevorzugt. In Figur 3b ist der Übergangsbereich 75 zwischen Verbindungsmittel 73 und Platinenmodul 50 zu erkennen, welcher aufgrund der Kontaktierung zwischen Platinenträger 51 und Verbindungsmittel 73 bei der gezeigten Ausführungsform besonders geschützt ist, wie dies nachfolgende Figuren zeigen. Bei der gezeigten Ausführungsform ist das Leuchtmodul einstückig mit dem Verbindungsmittel 73 ausgebildet, wie dies in Figur 3b angedeutet ist. Bei alternativen Ausführungsformen ist es möglich, dass das Verbindungsmittel 73 und das Leuchtmodul 70 als separate Bauteile ausgebildet sind, die vor dem Einfügen der Bauteilkombination Platinenmodul/Verbindungsmittel/Leuchtmodul zusammengefügt werden. Das in dem Leuchtmodul 70 angeordnete Leuchtmittel 71 wird über nicht dargestellte Leitungen, die sich durch das Verbindungsmittel erstrecken und in Kontaktelementen 76 (siehe Figur 4) enden, angesteuert.

Figur 4 zeigt eine Schrägansicht des Platinenmoduls 50 sowie einer Kombination Verbindungsmittel/Leuchtmodul. Bei dem Verbindungsmittel 73 sind zwei Kontaktelemente 76 dargestellt, die zum Befestigen des Verbindungsmittels an dem Platinenträger 51 durch (nicht dargestellte) Öffnungen in den Platinenträger 51 geführt sind, was in den Figuren 3a und 3b bereits angedeutet ist. Eine Befestigung des Verbindungsmittels an dem Platinenträger 51 ist beispielsweise möglich, indem die über den Platinenträger ragenden Abschnitte der Kontaktelemente 76 mit einem Klebemittel fixiert werden. Bei der gezeigten Ausführungsform ist insbesondere der Übergangsbereich 75 Platinenträger/Verbindungsmittel mechanisch beansprucht, so dass es bevorzugt ist, dass dieser Übergangsbereich mechanisch stabilisiert wird, wie dies bei der gezeigten Ausführungsform durch die Vergussmasse 55 geschieht, wie dies in Figur 2b bereits angedeutet ist und unter Bezugnahme auf nachfolgende Figuren näher dargelegt wird.

Figuren 5a - 5f zeigen verschiedene Seitenschrägansichten, die verschiedene Verfahrensschritte bevorzugter Ausführungsformen des erfindungsgemäßen Verfahrens veranschaulichen, wobei Figuren 5a - 5e eine erste Ausführungsform zeigen und Figur 5f einen Schritt einer zweiten Ausführungsform zeigt. Zur Herstellung der Griffanordnung wird zunächst ein Griffkörper 10 mit einem Handhabebereich 20 und zwei Befestigungsbereichen 30, 40 bereitgestellt. Der Handhabebereich 20 umfasst einen Handhabe-Aufnahmeraum 21, und der Befestigungsbereich 30 umfasst einen Befestigungs-Aufnahmeraum 31. In den Handhabe-Aufnahmeraum 21 wird ein Platinenmodul 50 eingeführt, wobei über die Kopplung des Platinenmoduls 50 mit dem Leuchtmodul 70, wie es in Figur 5a dargestellt ist, das Leuchtmodul 70 in den Befestigungs-Aufnahmeraum 31 eingeführt wird. Das Ergebnis der Einführung der Kombination Platinenmodul/Verbindungsmittel/Leuchtmodul in die beiden Aufnahmeräume ist in Figur 5b wiedergegeben. Nachdem das Platinenmodul 50, und mit ihm das Verbindungsmittel sowie das Leuchtmodul 70, in den Griffkörper eingesetzt wurden, wird bei der ersten Ausführungsform ein Schutzdeckel 80 derart auf das Platinenmodul bzw. den Griffkörper 10 aufgesetzt, dass Schutzdeckel 80 und Griffkörper 10 einen Schutzraum 81 bilden, wie er in der Seitenschnittansicht gemäß Figur 5c dargestellt ist. Wie es Figur 5c zu entnehmen ist, ist der Übergangsbereich 75 von Platinenmodul und Verbindungsmittel von dem Schutzdeckel 80 abgedeckt. Bei der gezeigten Ausführungsform umfasst der Schutzdeckel 80 bereits ein elastomeres Stützmittel 61, welches bei alternativen Ausführungsformen auch zu einem späteren Zeitpunkt auf den Schutzdeckel 80 aufgebracht werden kann.

Nachdem der Schutzraum 81 durch Aufsetzen des Schutzdeckels 80 ausgebildet ist, wird dieser mit einer Vergussmasse 55 verfüllt, welche in dem Schutzraum aushärtet und eine Ummantelung für das Platinenmodul bereitstellt, wie dies in der Seitenschnittansicht 5d wiedergegeben ist. In Figur 5d ist auch zu erkennen, dass der Übergangsbereich 75 zwischen Platinenmodul 50 und Verbindungsmittel von der Vergussmasse umschlossen ist, so dass eine mechanische Stabilisierung dieses Übergangsbereichs durch die Vergussmasse 55 gegeben ist. Gleichzeitig wird dieser Bereich mit der Vergussmasse auch gegen Umwelteinflüsse, insbesondere Feuchtigkeit, geschützt. In Figur 5e ist der Griffkörper 10 mit sämtlichen aufgebrachten Bauteilen zu erkennen. Insbesondere ist in Figur 5e zu erkennen, dass der Schutzdeckel 80 an seinen Rändern derart an den Griffkörper 10 angepasst ist, dass eine fluid-dichte Verbindungsstelle 12 geschaffen wird.

Bei Figur 5f ist ein weiterer Verfahrensschritt einer zweiten Ausführungsform dargestellt, nämlich wenn der Schutzdeckel 80 nach dem Verfüllen und Aushärten der Vergussmasse 55 wieder von dem Griffkörper entfernt ist. Dies kann beispielsweise dann sinnvoll sein, wenn die Vergussmasse selbst für eine ausreichende elektrische Abschirmung des Platinenmoduls Sorge trägt. In der Vergussmasse 55 ist eine Ausnehmung 62 zu erkennen, die als Negativ eines Vorsprunges des ursprünglichen Schutzdeckels in der Vergussmasse ausgebildet ist. In diese Ausnehmung wird in einem weiteren (nicht gezeigten) Verfahrensschritt das elastomere Stützmittel 61 eingesetzt. Bei Figur 5f sind ferner Rastmittel 13 zu erkennen, über welche der Schutzdeckel zum Verfüllen der Vergussmasse an dem Griffkörper befestigt war.

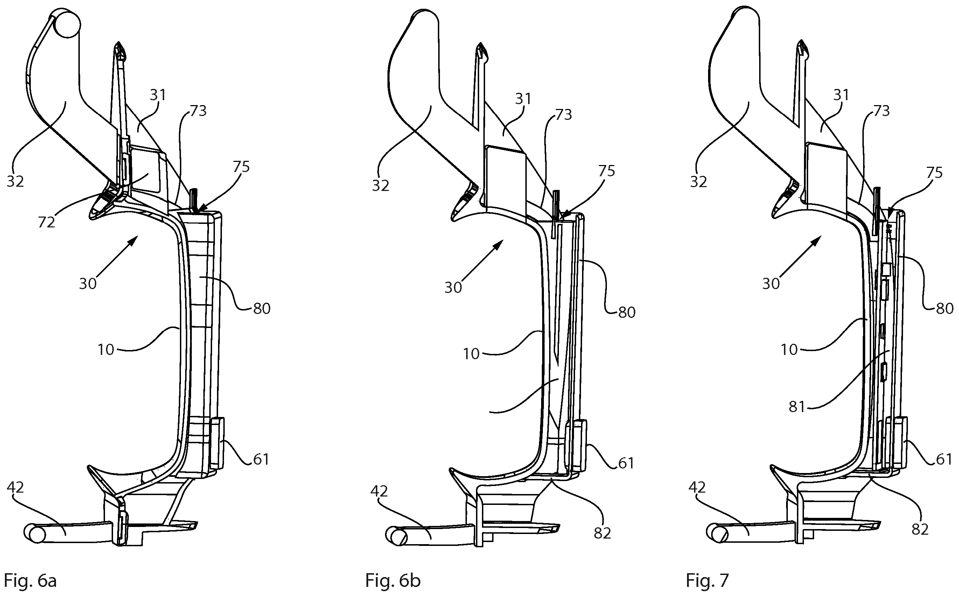

Figuren 6a und 6b zeigen eine detaillierte Seitenansicht sowie eine detaillierte Seitenschnittansicht der erfindungsgemäßen Griffanordnung vor Aufsetzen der Griffkörperabdeckung. Bei Figur 6b ist zu erkennen, dass der Schutzdeckel einen nach innen ragenden Abschnitt aufweist, der eine Aufnahme für das elastomere Stützmittel 61 bildet. Ferner ist der Schnittansicht gemäß Figur 6b zu entnehmen, dass der Schutzdeckel 80 bei seinem unteren Wandabschnitt 82 fluid-dicht mit dem Griffkörper 10 abschließt, so dass ein, bis auf eine obere Öffnung, fluid-dichter Schutzraum zur Aufnahme der Vergussmasse 55 gebildet ist.

Figur 7 zeigt eine Seitenschnittansicht der ersten Ausführungsform der erfindungsgemäßen Griffanordnung, wobei zur Veranschaulichung des Innenlebens die Vergussmasse 55 fortgelassen ist. Die Darstellung gemäß Figur 7 entspricht der Verfahrenssituation bevor die Vergussmasse in den Schutzraum 81 eingefüllt ist.

Bei der gezeigten Ausführungsform der erfindungsgemäßen Griffanordnung umfasst diese ein Leuchtmodul. Bei einer alternativen Ausführungsform ist es auch denkbar, dass zwei Leuchtmodule verbaut werden, und war in beiden Befestigungsbereichen, wobei dann in beiden Befestigungsbereichen gesonderte Befestigungs-Aufnahmeräume vorhanden sind. In einem solchen Fall wären beide Leuchtmodule mechanisch starr und elektrisch an das Platinenmodul gekoppelt, so dass auch in einem solchen Fall lediglich eine Leitungseinrichtung notwendig wäre.

## Patentansprüche

1. Griffanordnung (1) für ein Kraftfahrzeug, aufweisend
einen Griffkörper (10) und eine Griffkörperabdeckung (60), wobei der Griffkörper (10) einen Handhabebereich (20) sowie einen ersten und einen zweiten Befestigungsbereich (30, 40) mit jeweils einem Befestigungsmittel (32, 42) aufweist, mit welchen die Griffanordnung (1) an einem Kraftfahrzeug befestigbar ist und wobei der Handhabebereich (20) des Griffkörpers einen Handhabe-Aufnahmeraum (21) und zumindest einer der Befestigungsbereiche (30, 40) einen Befestigungs-Aufnahmeraum (31) aufweist, der mit dem Handhabe-Aufnahmeraum gekoppelt ist,
ein in dem Handhabe-Aufnahmeraum (21) angeordnetes Platinenmodul (50), das über eine Leitungseinrichtung (52) mit einer Steuereinrichtung koppelbar ist, sowie
zumindest ein in dem Befestigungs-Aufnahmeraum (31) angeordnetes Leuchtmodul (70),
**dadurch gekennzeichnet, dass** zwischen dem Platinenmodul (50) und dem Leuchtmodul (70) ein starres Verbindungsmittel (73) angeordnet ist und das Platinenmodul (50) und das Leuchtmodul (70) mechanisch starr und elektrisch miteinander koppelt.

2. Griffanordnung (1) für ein Kraftfahrzeug nach Anspruch 1, **dadurch gekennzeichnet, dass** das in dem Handhabe-Aufnahmeraum (21) angeordnete Platinenmodul (50) mit einem Schutzdeckel (80) versehen ist.

3. Griffanordnung (1) für ein Kraftfahrzeug nach einem der Ansprüche 1 oder 2, **dadurch gekennzeichnet, dass** das Platinenmodul (50) zumindest abschnittsweise mit Vergussmasse (55) abgedeckt ist.

4. Griffanordnung (1) für ein Kraftfahrzeug nach Anspruch 2 oder 3, **dadurch gekennzeichnet, dass** der Schutzdeckel (80) und der Handhabebereich (20) derart aufeinander abgestimmt sind, dass diese einen abgedichteten Schutzraum (81) für das Platinenmodul (50) ausbilden, der lediglich bei einer Seite in Fluid-Kommunikation mit der Umgebung steht.

5. Griffanordnung (1) für ein Kraftfahrzeug nach einem der Ansprüche 3 oder 4, **dadurch gekennzeichnet, dass** die Vergussmasse (55) einen Übergangsbereich (75) Platinenmodul/Verbindungsmittel umschließt.

6. Griffanordnung (1) für ein Kraftfahrzeug nach einem der Ansprüche 1 - 5, **dadurch gekennzeichnet, dass** in der Griffanordnung ein elastomeres Stützmittel (61) angeordnet ist, gegen welches sich die Griffkörperabdeckung (60) abstützt.

7. Verfahren zum Herstellen einer Griffanordnung (1),
wobei
ein Griffkörper (10) mit einem Handhabebereich (20) und einem ersten und einem zweiten Befestigungsbereich (30, 40) bereitgestellt wird, wobei der Handhabebereich (20) des Griffkörpers einen Handhabe-Aufnahmeraum (21) und zumindest einer der Befestigungsbereiche (30, 40) einen Befestigungs-Aufnahmeraum (31) aufweist, der mit dem Handhabe-Aufnahmeraum gekoppelt ist,
ein Platinenmodul (50) in den Handhabe-Aufnahmebereich (21) eingeführt wird, wobei dabei ein Leuchtmodul (70), das über ein Verbindungsmittel (73) mechanisch starr und elektrisch mit dem Platinenmodul (50) gekoppelt ist, in den Befestigungs-Aufnahmeraum (31) eingeführt wird,
das Platinenmodul (50) mit einer Vergussmasse (55) umgossen wird, und
die Griffkörperabdeckung (60) aufgesetzt und befestigt wird.

8. Verfahren zum Herstellen einer Griffanordnung (1) nach Anspruch 7, **dadurch gekennzeichnet, dass** das Platinenmodul (50) nach dem Einbringen in den Handhabe-Aufnahmeraum (21) mit einem Schutzdeckel (80) eingehaust wird, so dass ein zu einer Seite zumindest abschnittsweise offener, ansonsten fluid-dichter Schutzraum (81) entsteht, und
der Schutzraum (81) anschließend mit einer flüssigen Vergussmasse (55) verfüllt wird.

9. Verfahren zum Herstellen einer Griffanordnung (1) nach Anspruch 8, **dadurch gekennzeichnet, dass** das Platinenmodul (50) nach dem Einbringen in den Handhabe-Aufnahmeraum (21) mit einem Schutzdeckel (80) derart eingehaust wird, dass sich der Schutzraum (81) über einen Übergangsbereich (75) Platinenmodul/Verbindungsmittel erstreckt und der Schutzraum (81) derart mit flüssiger Vergussmasse (55) verfüllt wird, dass die Verbindungsstelle Elektronikmodul/Verbindungsmittel abgedeckt ist.

10. Verfahren zum Herstellen einer Griffanordnung (1) nach Anspruch 8 oder 9, **dadurch gekennzeichnet, dass** der Schutzdeckel (80) nach einem Aushärten der Vergussmasse (55) und vor dem Aufbringen der Griffkörperabdeckung (60) wieder entfernt wird.

11. Verfahren zum Herstellen einer Griffanordnung (1) nach einem der Ansprüche 7 - 10, **dadurch gekennzeichnet, dass** vor dem Aufbringen der Griffkörperabdeckung (60) ein elastomeres Stützmittel (61) derart angeordnet wird, dass nach dem Aufbringen der Griffkörperabdeckung (60) diese gegen die Vergussmasse oder den Schutzdeckel abgestützt wird.

12. Verfahren zum Herstellen einer Griffanordnung (1) nach einem der Ansprüche 8 - 11, **dadurch gekennzeichnet, dass** das Platinenmodul (50) vor dem Einführen in den Handhabe-Aufnahmeraum (21) über ein starres Verbindungsmittel (73) mechanisch und elektrisch mit dem Leuchtmodul (70) gekoppelt wird.

## Claims

1. A handle assembly (1) for a motor vehicle, comprising
a handle body (10) and a handle body cover (60), wherein the handle body (10) has a handle region (20) and a first and a second fastening region (30, 40), each comprising a fastening means (32, 42) with which the handle assembly (1) can be fastened to a motor vehicle, and wherein the handle region (20) of the handle body has a handle receiving space (21) and at least one of the fastening regions (30, 40) has a fastening receiving space (31) which is coupled to the handle receiving space,
a printed circuit board module (50) which is arranged in the handle receiving space (21) and can be coupled to a control device via a line device (52), and
at least one luminous module (70) arranged in the fastening receiving space (31),
**characterized in that** a rigid connecting means (73) is arranged between the board module (50) and the light module (70) and couples the board module (50) and the light module (70) mechanically rigidly and electrically to each other.

2. Handle assembly (1) for a motor vehicle according to claim 1, **characterized in that** the circuit board module (50) disposed in the handle receiving space (21) is provided with a protective cover (80).

3. Handle arrangement (1) for a motor vehicle according to one of claims 1 or 2, **characterized in that** the printed circuit board module (50) is covered at least in sections with casting compound (55).

4. Handle assembly (1) for a motor vehicle according to claim 2 or 3, **characterized in that** the protective cover (80) and the handling area (20) are matched to each other in such a way that they form a sealed protective space (81) for the circuit board module (50), which is in fluid communication with the environment on one side only.

5. Handle assembly (1) for a motor vehicle according to any one of claims 3 or 4, **characterized in that** the potting compound (55) encloses a transition region (75) board module/connector.

6. Handle assembly (1) for a motor vehicle according to any one of claims 1 - 5, **characterized in that** an elastomeric support means (61) is arranged in the handle assembly, against which the handle body cover (60) is supported.

7. A method of manufacturing a handle assembly (1),
wherein
a handle body (10) is provided having a handle receiving portion (20) and first and second attachment portions (30, 40), the handle portion (20) of the handle body having a handle receiving space (21) and at least one of the attachment portions (30, 40) having an attachment receiving space (31) coupled to the handle receiving space,
a board module (50) is inserted into the handle receiving area (21), wherein a light module (70), which is mechanically rigidly and electrically coupled to the board module (50) via a connecting means (73), is inserted into the mounting receiving space (31),
the board module (50) is encapsulated with a potting compound (55), and
the handle body cover (60) is put on and fastened.

8. Method for producing a handle arrangement (1) according to claim 7, **characterized in that** the blank module (50), after being introduced into the handle receiving space (21), is enclosed with a protective cover (80), so that a protective space (81) which is open at least in sections to one side and is otherwise fluid-tight is produced, and
the protective space (81) is then filled with a liquid casting compound (55).

9. Method for producing a handle arrangement (1) according to Claim 8, **characterized in that** the printed circuit board module (50), after being introduced into the handle-receiving space (21), is enclosed with a protective cover (80) in such a way that the protective space (81) extends over a transition region (75) between the printed circuit board module and the connecting means, and the protective space (81) is filled with liquid casting compound (55) in such a way that the junction between the electronic module and the connecting means is covered.

10. Method of manufacturing a handle assembly (1) according to claim 8 or 9, **characterized in that** the protective cover (80) is removed again after the potting compound (55) has cured and before the handle body cover (60) is applied.

11. Method of manufacturing a handle assembly (1) according to any one of claims 7-10, **characterized in that** an elastomeric support means (61) is arranged prior to application of the handle body cover (60) such that after application of the handle body cover (60) it is supported against the potting compound or the protective cover.

12. Method of manufacturing a handle assembly (1) according to any one of claims 8-11, **characterized in that** the board module (50) is mechanically and electrically coupled to the light module (70) via a rigid connection means (73) prior to insertion into the handle receiving space (21).

## Revendications

1. Ensemble de poignée (1) pour un véhicule à moteur, comprenant
un corps de poignée (10) et un couvercle de corps de poignée (60), dans lequel le corps de poignée (10) présente une zone de poignée (20) et une première et une deuxième zone de fixation (30, 40) avec chacune un moyen de fixation (32, 42), avec lequel l'ensemble de poignée (1) peut être fixé sur un véhicule automobile, et dans lequel la zone de poignée (20) du corps de poignée présente un espace de réception de poignée (21) et au moins l'une des zones de fixation (30, 40) présente un espace de réception de fixation (31) qui est couplé à l'espace de réception de poignée,
un module de carte de circuit imprimé (50) qui est disposé dans l'espace de réception de poignée (21) et peut être couplé à un dispositif de commande par l'intermédiaire d'un dispositif de ligne (52), et
au moins un module de lumière (70) disposé dans l'espace de réception de la fixation (31),
**caractérisé en ce qu'**un moyen de connexion rigide (73) est disposé entre le module de carte de circuit imprimé (50) et le module de lumière (70) et couple mécaniquement rigidement et électriquement le module de carte de circuit imprimé (50) et le module de lumière (70) l'un à l'autre.

2. Ensemble de poignée (1) pour un véhicule automobile selon la revendication 1, **caractérisé en ce que** le module de carte de circuit imprimé (50) étant disposé dans l'espace de réception de poignée (21) est pourvu d'un couvercle de protection (80).

3. Ensemble de poignée (1) pour un véhicule automobile selon l'une quelconque des revendications 1 ou 2, **caractérisé en ce que** le module de carte de circuit imprimé (50) est recouvert d'un composé d'enrobage (55) au moins dans une section du module de carte de circuit imprimé (50).

4. Ensemble de poignée (1) pour un véhicule automobile selon l'une quelconque des revendications 2 ou 3, **caractérisé en ce que** le couvercle de protection (80) et la zone de poignée (20) sont adaptés l'un à l'autre de telle sorte qu'ils forment un espace de protection étanche (81) pour le module de carte de circuit imprimé (50), qui est en communication fluidique avec l'environnement sur un seul côté.

5. Ensemble de poignée (1) pour un véhicule automobile selon l'une quelconque des revendications 3 ou 4, **caractérisé en ce que** le composé d'enrobage (55) entoure une région de transition (75) module de carte de circuit imprimé/moyen de connexion rigide.

6. Ensemble de poignée (1) pour un véhicule automobile selon l'une quelconque des revendications 1 à 5, **caractérisé en ce qu'**un moyen d'appui en élastomère (61) est disposé dans l'ensemble de poignée, contre lequel le couvercle de corps de poignée (60) s'appuie.

7. Procédé de fabrication d'un ensemble de poignée (1),
dans lequel
un corps de poignée (10) est fourni avec un espace de réception de poignée (20) et des première et deuxième parties de fixation (30, 40), la partie de poignée (20) du corps de poignée ayant une zone de poignée (21) et au moins une des parties de fixation (30, 40) ayant un espace de réception de fixation (31) couplé à l'espace de réception de poignée,
un module de carte de circuit imprimé (50) est inséré dans la zone de réception de poignée (21), dans lequel un module de lumière (70), qui est mécaniquement rigide et électriquement couplé au module de carte de circuit imprimé (50) via un moyen de connexion (73), est inséré dans l'espace de réception de fixation (31),
le module de carte de circuit imprimé (50) est encapsulé avec un composé d'enrobage (55), et
le couvercle du corps de la poignée (60) est mis en place et fixé.

8. Procédé de fabrication d'un ensemble de poignée (1) selon la revendication 7, **caractérisé en ce que** le module de carte de circuit imprimé (50), après son introduction dans l'espace de réception de poignée (21), est entouré d'un couvercle de protection (80), de sorte qu'il se forme un espace de protection étanche (81) ouvert au moins en partie sur un côté et par ailleurs étanche aux fluides, et que
l'espace de protection étanche (81) est ensuite rempli d'un composé d'enrobage (55) liquide.

9. Procédé de fabrication d'un ensemble de poignée (1) selon la revendication 8, **caractérisé en ce que** le module de carte de circuit imprimé (50), après avoir été introduit dans l'espace de réception de poignée (21), est entouré d'un couvercle de protection (80) de telle sorte que l'espace de protection (81) s'étende sur une zone de transition (75) entre le module de carte de circuit imprimé et le moyen de connexion, et l'espace de protection (81) est rempli d'un composé d'enrobage (55) de telle sorte que la jonction entre le module électronique et le moyen de connexion soit couverte.

10. Procédé de fabrication d'un ensemble de poignée (1) selon l'une quelconque des revendications 8 ou 9, **caractérisé en ce que** le couvercle de protection (80) est à nouveau retiré après le durcissement de la masse de scellement (55) et avant l'application du couvercle de corps de poignée (60).

11. Procédé de fabrication d'un ensemble de poignée (1) selon l'une quelconque des revendications 7 à 10, **caractérisé en ce qu'**un moyen d'appui en élastomère (61) est disposé avant l'application du couvercle de corps de poignée (60) de telle sorte qu'après l'application du couvercle de corps de poignée (60), ce dernier est appuyé contre le composé d'enrobage ou le couvercle de protection.

12. Procédé de fabrication d'un ensemble de poignée (1) selon l'une quelconque des revendications 8 à 11, **caractérisé en ce que** le module de carte de circuit imprimé (50) est couplé mécaniquement et électriquement au module de lumière (70) via un moyen de connexion rigide (73) avant son insertion dans l'espace de réception de poignée (21).
